# EUROPÄISCHE PATENTSCHRIFT

(11) **EP 2 558 336 B1**
(45) Veröffentlichungstag und Bekanntmachung des Hinweises auf die Patenterteilung: **17.12.2014**
(21) Anmeldenummer: 11718262.6
(22) Anmeldetag: 05.04.2011
(51) Int. Cl.: B60S 1/08, B60Q 1/08

(54) **VERFAHREN UND VORRICHTUNG ZUR FAHRERUNTERSTÜTZUNG BEIM FAHREN EINES FAHRZEUGS DURCH DETEKTION VON WETTERBEDINGTEN SICHTEINSCHRÄNKUNGEN**
METHOD AND DEVICE FOR ASSISTING A DRIVER WHILE DRIVING A VEHICLE BY DETECTING WEATHER-RELATED VISIBILITY LIMITATIONS
PROCÉDÉ ET DISPOSITIF D'ASSISTANCE AU CONDUCTEUR LORS DE LA CONDUITE D'UN VÉHICULE CONSISTANT À DÉTECTER UNE VISIBILITÉ RÉDUITE DUE AUX CONDITIONS ATMOSPHÉRIQUES

(30) Priorität: 16.04.2010 DE 102010015214
(43) Veröffentlichungstag der Anmeldung: 20.02.2013
(73) Patentinhaber: Conti Temic Microelectronic GmbH, 90411 Nürnberg (DE)
(72) Erfinder: ALMEIDA, Carlos, 64354 Reinheim-Zeilhand (DE); RANDLER, Martin, 88090 Immenstaad (DE); BAUER, Jochen, 88131 Lindau (DE)
(86) Internationale Anmeldenummer: PCT/DE2011/000366
(87) Internationale Veröffentlichungsnummer: WO 2011/127895

(56) Entgegenhaltungen:
- EP-A2- 1 790 541
- WO-A2-2004/007255
- DE-A1-102004 037 871
- DE-A1-102006 016 774
- DE-T2- 69 836 344
- JP-A- 2005 225 250

## Beschreibung

Die Erfindung betrifft ein Verfahren zur Fahrerunterstützung beim Fahren eines Fahrzeugs durch Detektion von wetterbedingten Sichteinschränkungen gemäß Oberbegriff des Patentanspruchs 1 und des Patentanspruchs 2. Ferner betrifft die Erfindung eine Vorrichtung zur Durchführung des erfindungsgemäßen Verfahrens.

Heutzutage ist die Verwendung von Regensensoren zur automatischen Steuerung von Scheibenwischern in Kraftfahrzeugen weit verbreitet. Ein solcher Regensensor basiert bspw. auf einer optoelektronischen Messung durch eine Leuchtdiode (LED) als Lichtquelle und eine detektierende Fotodiode. Dabei wird die physikalische Gesetzmäßigkeit der Reflexion an der Grenze vom optisch dichten zum optisch dünneren Material genutzt.

Es gibt auch andere Funktionsprinzipien zur Realisierung eines Regensensors, so kann z. Bsp. der Veränderung der Kapazität eines beregneten elektrischen Kondensators verwendet werden.

Weiterhin werden auch Systeme eingesetzt, welche mittels einer Kamera Bildaufnahmen der Windschutzscheibe eines Fahrzeugs erzeugen, wobei diese Bildaufnahmen von Bildverarbeitungssystemen hinsichtlich Regentropfen auf der Außenfläche der Windschutzscheibe oder hinsichtlich auf der Innenfläche der Windschutzscheibe niedergeschlagenen Kondensats ausgewertet werden.

So ist bspw. aus der WO 2004/007255 A2 ein System mit einer Videokamera beschrieben, mit der Nässe auf einer Windschutzscheibe eines Fahrzeugs erkannt werden kann. Hierzu erfolgt nach einer Fokussierung der Optik der Videokamera auf den Bereich der Oberfläche der Windschutzscheibe wenigstens eine Bildaufnahme, deren Bilddaten auf Nässe untersucht werden. Dabei wird angenommen, dass sich Regentropfen in den Bilddaten als runde Objekte erkennen lassen, während sich von Nebel stammender Niederschlag auf der Außenfläche der Windschutzscheibe durch Streuung von außerhalb des Fahrzeugs herkommenden Lichts erkennen lässt.

Die DE 102004037871 B4 zeigt ein Kamerasystem für ein den Außenvorraum in Fahrtrichtung eines Kraftfahrzeugs erfassendes Assistenzsystem. Durch Einbringen einer Vorsatzlinse in einem Teilsichtfeld vor dem Objektiv der Fahrzeugkamera werden Fern- (Straßenszene) und Nahbereich (Windschutzscheibe) auf einen Bildsensor abgebildet. Es wird vorgeschlagen, einen Bildsensor für eine Außenraumassistenzfunktion und eine Regenfunktionalität zu verwenden.

Weiterhin ist in der DE 698 36 344 T2 ein Regensensorsystem mit einer Kamera beschrieben, welches mittels einer zusätzlichen Lichtquelle die Detektion von Kondensat auf der Innenfläche der Windschutzscheibe möglich macht, so dass bspw. anstelle eines Scheibenwischers eine Scheibenheizung eingeschaltet wird.

Zur Detektion von Regen wird gemäß der DE 10 2006 016 774 A1 eine auf unendlich eingestellt Kamera verwendet und die Bilddaten auf der Grundlage einer Veränderung von Pixelintensitäten, die in dem Bild enthalten sind, gegenüber einer durchschnittlichen Intensität der Pixel ausgewertet.

Auch die WO 2006/024247 A1 beschreibt ein Verfahren zu Detektion von Niederschlag auf einer Scheibe, bei dem eine Kamera auf unendlich eingestellt ist, so dass dadurch die Scheibe unscharf abgebildet wird. Regentropfen oder ein Beschlag auf der Innenfläche der Scheibe bewirken einen Weichzeichner-Effekt. Es wird die Schärfe des Bildes und/oder die Kontrastunterschiede benachbarter Pixel bewertet und daraus auf ein Vorhandensein von Niederschlag auf der Scheibe geschlossen. Auch wird in dieser Druckschrift vorgeschlagen, bei einem kontrastarmen Fahrzeugumfeld ein erstes Bild aufzunehmen, nachfolgend einen Scheibenwischer oder eine Heizung zu aktivieren und danach ein zweites Bild aufzunehmen, um die beiden Bilder hinsichtlich Änderungen zu bewerten.

Schließlich sind auch Systeme zur Erkennung von Nebel bekannt, die zur Steuerung von Nebelscheinwerfern und Nebelschlussleuchten verwendet werden. So wird gemäß der DE 695 04 761 T2 mittels einer Kamera ein Umgebungsbild aufgenommen und dessen Bilddaten auf der Basis einer Kontrastanalyse zur Erkennung von Nebel ausgewertet.

Die EP 1 790 541 A2 zeigt ein System und Verfahren zur Erkennung von Sichtbehinderungen im Sichtbereich einer Kamera. Hierzu ist eine erste Kamera vorgesehen, die die Fahrzeugumgebung durch die Windschutzscheibe eines Fahrzeugs erfasst, sowie eine zweite Kamera, die auf den Bereich der Windschutzscheibe fokussiert ist, durch den die erste Kamera die Fahrzeugumgebung erfasst. Aus den Bilddaten der ersten Kamera können Sichtbehinderungen ermittelt werden, die mit Hilfe von Bilddaten der zweiten Kamera klassifiziert werden können. Sofern und solange die Sichtbehinderungen als Regentropfen klassifiziert werden, wird der Scheibenwischer aktiviert. Sofern die Sichtbehinderungen als Vereisung klassifiziert werden, wird die Windschutzscheibe enteist.

Aufgabe der Erfindung ist es, ein gegenüber dem Stand der Technik verbesserte Verfahren der eingangs genannten Art anzugeben, die den Fahrer insbesondere bei Sichteinschränkungen besser unterstützen.

Diese Aufgabe wird gelöst durch ein Verfahren mit den Merkmalen des Patentanspruchs 1 als auch mit den Merkmalen des Patentanspruchs 2.

Gemäß Patentanspruch 1 wird zur Erkennung einer Innen- und/oder Außenbenetzung der Windschutzscheibe mit Nässe und/oder Kondensat bzw. einer Sichteinschränkung durch Nebel und/oder Innen- und/oder Außenbenetzung der Windschutzscheibe mit Nässe und/oder Kondensat eine Kamera mit einem bifokalen optischen Element verwendet. Bei dem bifokalen optischen Element kann es sich insbesondere um eine Bifokallinse, eine planparallele Platte, die nur in einem Teilbereich (lateral) des Abbildungsstrahlengangs liegt, oder ein durchgängiges Element mit mindestens zwei Teilbereichen unterschiedlicher Dicke. Das bifokale optische Element bewirkt, dass in einem ersten Bildbereich der Kamera die Windschutzscheibe fokussiert abgebildet wird und in einem zweiten Bildbereich derselben Kamera gleichzeitig die Fahrzeugumgebung.
Es wird wenigstens eine Bildaufnahme durch die Kamera erzeugt. Zur Erkennung einer Innen- und/oder Außenbenetzung der Windschutzscheibe mit Nässe und/oder Kondensat werden die Bilddaten des ersten Bildbereichs der wenigstens einen Bildaufnahme von einem Bildverarbeitungssystem ausgewertet.
Im Erkennungsfall wird ein erstes Auswertesignal erzeugt, welches eine Innen- und/oder Außenbenetzung der Windschutzscheibe mit Nässe und/oder Kondensat anzeigt.
Zur Erkennung einer Sichteinschränkung durch Nebel und/oder Innen- und/oder Außenbenetzung der Windschutzscheibe mit Nässe und/oder Kondensat werden die Bilddaten des zweiten Teilbereichs der wenigstens einen Bildaufnahme von einem Bildverarbeitungssystem ausgewertet.
Im Erkennungsfall folgt die Erzeugung eines die Sichteinschränkung anzeigenden zweiten Auswertesignals. Schließlich ist eine Steuereinrichtung vorgesehen, die bei erzeugten ersten und zweiten Auswertesignalen einen die Windschutzscheibe im Sichtbereich der Kamera überstreichenden Scheibenwischer des Fahrzeugs aktiviert und nach einer vorgegebenen Zeitdauer deaktiviert und eine Scheibenheizung des Fahrzeugs aktiviert, falls nach der vorgegebenen Zeitdauer nach wie vor das erste und zweite Auswertesignal vorliegt, und die bei ausschließlichem Vorliegen des zweiten Auswertesignals eine Warneinrichtung des Fahrzeuges und/oder einen Nebelscheinwerfer des Fahrzeugs und/oder eine Nebelschlussleuchte des Fahrzeugs aktiviert.

Damit kann in vorteilhafter Weise mit nur einem eine Kamera aufweisenden System eine Sichtbeeinträchtigung des Fahrers, die bspw. durch Kondensat auf der Innenfläche der Windschutzscheibe, durch Regen oder Feuchtigkeitsbeschlag auf deren Außenfläche oder durch die Wetterlage, wie z. B. Nebel, Regen bewirkt wird, detektiert werden und unmittelbar die erforderlichen Maßnahmen eingeleitet werden, also bspw. einen Scheibenwischer oder eine Scheibenheizung einschalten und bei Nebel Sicherheitsfunktionen aktivieren, wie Einschalten eines Nebellichts und einer Nebelschlussleuchte.

Gemäß Patentanspruch 2 ist ein separater Regensensor, vorzugsweise auf opto-elektronischer Basis vorgesehen, mittels dem bei einer Innen- und/oder Außenbenetzung der Windschutzscheibe mit Nässe und/oder Kondensat ein erstes Auswertesignal erzeugt wird; ferner wird zur Erkennung einer Sichteinschränkung durch Nebel und/oder Innen- und/oder Außenbenetzung der Windschutzscheibe mit Nässe und/oder Kondensat mit einer auf die Fahrzeugumgebung fokussierten Kamera wenigstens eine Bildaufnahme erzeugt, wobei zur Erzeugung eines die Sichteinschränkung anzeigenden zweiten Auswertesignals die Bilddaten der wenigstens einen Bildaufnahme der Fahrzeugumgebung von einem Bildverarbeitungssystem ausgewertet werden, und schließlich ist eine Steuereinrichtung vorgesehen, die bei erzeugten ersten und zweiten Auswertesignalen einen die Windschutzscheibe im Sichtbereich der Kamera überstreichenden Scheibenwischer des Fahrzeugs aktiviert und nach einer vorgegebenen Zeitdauer deaktiviert und eine Scheibenheizung des Fahrzeugs aktiviert, falls nach der vorgegebenen Zeitdauer nach wie vor das erste und zweite Auswertesignal vorliegt, und die bei ausschließlichem Vorliegen des zweiten Auswertesignals eine Warneinrichtung des Fahrzeuges und/oder einen Nebelscheinwerfer des Fahrzeugs und/oder eine Nebelschlussleuchte des Fahrzeugs aktiviert.

Dieses Verfahren bietet (neben den bereits genannten) den Vorteil, dass die üblichen Regensensoren, die bspw. auf opto-elektronischer Basis arbeiten, weiterhin eingesetzt werden können und lediglich zusätzlich eine auf unendlich eingestellte Kamera, die in vielen Fällen für Assistenzsysteme zur Fahrzeugumfeldbeobachtung (Fahrspurerkennung, Quer- und Längsregelung, Verkehrszeichenerkennung usw.) bereits zur Verfügung steht, erforderlich ist und die insbesondere kostengünstig erhältlich ist.

Bei Verwendung eines bifokalen optischen Elements werden gleichzeitig Bildbereiche mit der Fahrzeugumgebung und der Windschutzscheibe erhalten. Zur Erkennung einer Benetzung der Windschutzscheibe mit Nässe und/oder Kondensat genügt ein kleiner Bildbereich von z.B. 10 Prozent des Gesamtkamerabildes. Damit können auch die von der Fahrzeugumgebung gewonnen Bilddaten einem weiteren Bildverarbeitungssystem zugeführt werden, um bspw. eine Spurerkennung oder eine Verkehrszeichenerkennung zu realisieren.

Auch bei einer Weiterbildung des erfindungsgemäßen Verfahrens nach Patentanspruch 2 können die Bilddaten der von der Kamera aufgenommen Fahrzeugumgebung einem weiteren Bildverarbeitungssystem zugeführt werden, um bspw. eine Spurerkennung oder eine Verkehrszeichenerkennung zu realisieren.

Es hat sich als besonders vorteilhaft herausgestellt, wenn gemäß einer Weiterbildung der erfindungsgemäßen Verfahren bei der Bildaufnahme der Fahrzeugumgebung die Brennweite dauerhaft auf unendlich eingestellt ist.

Schließlich wird gemäß einer vorteilhaften Weiterbildung der erfindungsgemäßen Verfahren zur Erzeugung eines die Sichteinschränkung anzeigenden zweiten Auswertesignals die Bilddaten der wenigstens einen Bildaufnahme der Fahrzeugumgebung von dem Bildverarbeitungssystem auf der Basis der Kontrastgüte der Bilddaten ausgewertet werden.

Eine Vorrichtung zur Durchführung der erfindungsgemäßen Verfahren wird mit den Merkmalen des Patentanspruchs 7 bzw. des Patentanspruchs 8 angegeben. Eine vorteilhafte Weiterbildung der erfindungsgemäßen Vorrichtung ergibt sich aus dem abhängigen Patentanspruch 9.

Die Erfindung wird nachfolgend unter Bezugnahme auf die beigefügten Figuren näher erläutert. Es zeigen:
- Figur 1: ein Blockschaltbild, das einen schematischen Aufbau einer Vorrichtung zur Durchführung eines Ausführungsbeispiels des erfindungsgemäßen Verfahrens zeigt, und
- Figur 2: ein Blockschaltbild, das einen schematischen Aufbau einer Vorrichtung zur Durchführung eines weiteren Ausführungsbeispiels des erfindungsgemäßen Verfahrens zeigt.

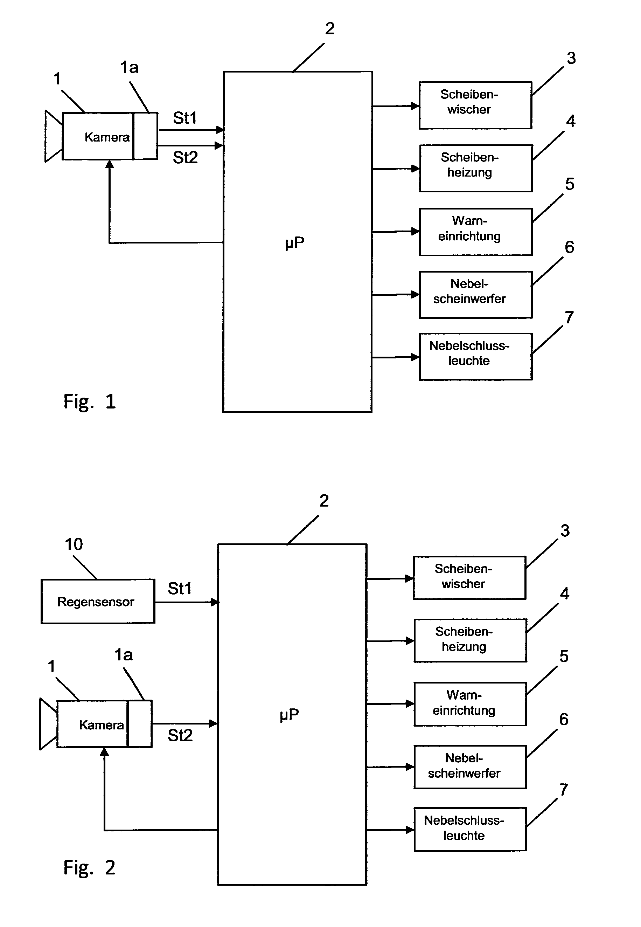

Die in Figur 1 dargestellte Vorrichtung ist vorgesehen für eine Installation in einem Fahrzeug. Hierzu ist eine Kamera 1 im Fahrzeug auf dessen Windschutzscheibe gerichtet und wird von einer Steuereinrichtung 2, in der Regel ein Mikroprozessor angesteuert.

Die Kamera 1 umfasst ein bifokales optisches Element, z.B. eine bifokale Linse, so dass die Kamera 1 gleichzeitig in einem ersten Bildbereich auf die Windschutzscheibe fokussiert ist und in einem zweiten Bildbereich auf die Fahrzeugumgebung. Das bifokale optische Element kann vorzugsweise derart ausgebildet und angeordnet sein, dass die Fahrzeugumgebung mit einer Brennweite auf unendlich im zweiten Bildbereich abgebildet wird.

Eine solche Kamera 1 wird von der Steuereinrichtung 2 derart angesteuert, dass zur Erkennung einer Innen- und/oder Außenbenetzung der Windschutzscheibe mit Nässe und/oder Kondensat bzw. zur Erkennung einer Sichteinschränkung, bspw. durch Nebel und/oder Innen- und/oder Außenbenetzung der Windschutzscheibe mit Nässe und/oder Kondensat die Kamera 1 wenigstens eine Bildaufnahme erzeugt. Zur Erzeugung eines eine Innen- und/oder Außenbenetzung der Windschutzscheibe mit Nässe und/oder Kondensat anzeigenden ersten Auswertesignals St1 werden die Bilddaten des ersten Bildbereichs der wenigstens einen Bildaufnahme von einem Bildverarbeitungssystem 1a ausgewertet. Dieses Bildverarbeitungssystem la kann auch Teil der Steuereinrichtung 2 sein.
Analog werden die Bilddaten des zweiten Bildbereichs von dem Bildverarbeitungssystem la ausgewertet und es wird ein zweites Auswertesignal St2 erzeugt, wenn eine Sichteinschränkung detektiert wird. Die Auswertung erfolgt z.B. auf der Basis der bewerteten Kontrastgüte der Bilddaten.

Die Auswertung der beiden Auswertesignale St1 und St2 erfolgt gemäß Figur 1 mittels der Steuereinrichtung 2 und kann soft-ware- oder hardwaremäßig realisiert werden.

Liegt also sowohl das erste Auswertesignal St1 als auch das zweite Auswertesignal St2, bspw. als High-Pegel vor, wird von der Steuereinrichtung 2 ein Einschalt-Signal einem Scheibenwischer 3 des Fahrzeugs zugeführt. Dies führt dazu, dass die Windschutzscheibe, insbesondere auch im Bereich des Sichtfensters der Kamera 1 überwischt wird.

Nach einer vorgegebenen Zeitdauer wird von der Steuereinrichtung 2 geprüft, ob weiterhin beide Auswertesignale St1 und St2 vorliegen. Dabei ist diese Zeitdauer so bemessen, dass der Scheibenwischer wenigstens einmal über die Windschutzscheibe wischt, und so gegebenenfalls Nässe oder Kondensat auf der äußeren Fläche der Scheibe weggewischt. Hierzu können auch mehrere Wischzyklen erforderlich sein.

Wenn jedoch auch nach dieser vorgegebenen Zeitdauer beide Auswertesignale St1 und St2 von dem Bildverarbeitungssystem la erzeugt werden, zeigt dies an, dass sich die detektierte Sichteinschränkung nicht beseitigen lässt, also keine Nässe oder Feuchtigkeit auf der Außenfläche der Windschutzscheibe vorhanden ist, sondern die Innenfläche der Windschutzscheibe mit Kondensat belegt ist. Die Steuereinrichtung 2 erzeugt darauf hin ein Ausschalt-Signal für den Scheibenwischer 3 und ein Einschalt-Signal für eine Scheibenheizung 4. Dies bewirkt, dass durch die eingeschaltet Scheibenheizung 4 das Kondensat auf der Innenfläche der Windschutzscheibe beseitigt wird und für den Fahrer die Sichtbeeinträchtigung beseitigt wird.

Wenn jedoch tatsächlich Nässe oder Feuchtigkeit die Windschutzscheibe benetzt, wird durch den Wischvorgang während der vorgegebenen Zeitdauer die Windschutzscheibe freigewischt, infolgedessen das Bildverarbeitungssystem weder ein Auswertesignal St1 noch ein Auswertesignal St2 erzeugt, so dass der Scheibenwischer 4 eingeschaltet bleibt oder zyklisch in Abhängigkeit der Regenmenge von der Steuereinrichtung 2 aktiviert wird.

Wird von dem Bildverarbeitungssystem 1a nur ein zweites Auswertesignal St2 erzeugt, d. h. dass die Bilddaten des zweiten Bildbereichs der Kamera 1 Sichteinschränkungen anzeigen, deren Ursache bspw. auf Nebel und/oder Innen- und/oder Außenbenetzung der Windschutzscheibe mit Nässe und/oder Kondensat beruht, wogegen die Bilddaten im ersten Bildbereich der Kamera 1 keine Sichteinschränkung anzeigen, also keine Innen- und/oder Außenbenetzung der Windschutzscheibe mit Nässe und/oder Kondensat detektiert wird, bedeutet das, dass die von der Kamera 1 detektierte Sichteinschränkung vermutlich auf Nebel beruht.

Damit wird von der Vorrichtung gemäß Figur 1 mit hoher Sicherheit Nebel erkannt, mit der Folge, dass die Steuereinrichtung 2 zur Warnung des Fahrers vor Nebel eine Warneinrichtung aktiviert, wobei dies optisch oder akustisch erfolgen kann. Zusätzlich können auch die Nebelscheinwerfer des Fahrzeugs und/oder dessen Nebelschlussleuchte eingeschaltet werden.

Die Vorrichtung nach Figur 2 unterscheidet sich von derjenigen nach Figur 1 dadurch, dass neben der von einer Steuereinrichtung 2 angesteuerten Kamera 1 auch ein Regensensor 10 üblicher Bauart, bspw. auf opto-elektronischer Basis vorgesehen ist. Die Kamera 1 ist im Vergleich zu derjenigen nach Figur 1 derart ausgebildet, dass die Kamera in Figur 2 kein bifokales optisches Element aufweist, sondern eine einheitliche fest auf unendlich eingestellte Brennweite aufweist. Solche Kameras sind auf dem Markt kostengünstig erhältlich.

Der Regensensor 10 führt der Steuereinrichtung 2 ein erstes Auswertesignal St1 zu, wenn dieser Regensensor 10 eine Innen- und/oder Außenbenetzung der Windschutzscheibe mit Nässe und/oder Kondensat detektiert.

Die Kamera 1 mit einem Bildverarbeitungssystem la erzeugt ein zweites Auswertesignal St2, wenn durch Auswertung der von der Fahrzeugumgebung aufgenommenen Bilddaten mittels des Bildverarbeitungssystem 1a eine Sichteinschränkung detektiert wird, die bspw. durch Nebel und/oder Innen- und/oder Außenbenetzung der Windschutzscheibe mit Nässe und/oder Kondensat entstanden ist. Die Auswertung erfolgt ebenfalls auf der Basis der bewerteten Kontrastgüte der Bilddaten.

Die Funktionsweise dieser Vorrichtung nach Figur 2 entspricht ansonsten derjenigen nach Figur 1.

### Bezugszeichen

- 1: Kamera
- 1a: Bildverarbeitungssystem der Kamera 1
- 2: Steuereinrichtung, Mikroprozessor
- 3: Scheibenwischer
- 4: Scheibenheizung
- 5: Warneinrichtung
- 6: Nebelscheinwerfer
- 7: Nebelschlussleuchte

## Patentansprüche

1. Verfahren zur Fahrerunterstützung beim Fahren eines Fahrzeugs durch Detektion von wetterbedingten Sichteinschränkungen, bei welchem mittels einer auf die Windschutzscheibe gerichteten Kamera (1) Bilddaten der Fahrzeugumgebung und der Windschutzscheibe erzeugt werden, wobei wenigstens eine Bildaufnahme durch die Kamera (1) erzeugt wird, **dadurch gekennzeichnet dass**,
- die Kamera (1) ein bifokales optisches Element umfasst, so dass die Kamera (1) in einem ersten Bildbereich auf die Windschutzscheibe und in einem zweiten Bildbereich auf die Fahrzeugumgebung fokussiert ist,
- zur Erkennung einer Innen- und/oder Außenbenetzung der Windschutzscheibe mit Nässe und/oder Kondensat die Bilddaten des ersten Bildbereichs der wenigstens einen Bildaufnahme von einem Bildverarbeitungssystem (1a) ausgewertet werden und im Erkennungsfall ein eine Innen- und/oder Außenbenetzung der Windschutzscheibe mit Nässe und/oder Kondensat anzeigendes erstes Auswertesignal (St1) erzeugt wird,
- zur Erkennung einer Sichteinschränkung, vorzugsweise durch Nebel und/oder Innen- und/oder Außenbenetzung der Windschutzscheibe mit Nässe und/oder Kondensat die Bilddaten des zweiten Bildbereichs der wenigstens einen Bildaufnahme von einem Bildverarbeitungssystem (1a) ausgewertet werden und im Erkennungsfall ein die Sichteinschränkung anzeigendes zweites Auswertesignal (St2) erzeugt wird,
- eine Steuereinrichtung (2) vorgesehen ist, die bei erzeugten ersten und zweiten Auswertesignalen (St1, St2) einen die Windschutzscheibe im Sichtbereich der Kamera (1) überstreichenden Scheibenwischer (3) des Fahrzeugs aktiviert und nach einer vorgegebenen Zeitdauer deaktiviert, falls nach der vorgegebenen Zeitdauer nach wie vor das erste und zweite Auswertesignal (St1, St2) vorliegt und die nach der Deaktivierung der Scheibenwischer (3) eine Scheibenheizung (4) des Fahrzeugs aktiviert, und
- die Steuereinrichtung (2) bei ausschließlichem Vorliegen des zweiten Auswertesignals (St2) eine Warneinrichtung (5) des Fahrzeuges und/oder einen Nebelscheinwerfer (6) des Fahrzeugs und/oder eine Nebelschlussleuchte (7) des Fahrzeugs aktiviert.

2. Verfahren zur Fahrerunterstützung beim Fahren eines Fahrzeugs durch Detektion von wetterbedingten Sichteinschränkungen, bei welchem mittels einer auf die Windschutzscheibe gerichteten Kamera (1) Bilddaten der Fahrzeugumgebung erzeugt werden, wobei
- ein Regensensor (10) vorgesehen ist, mittels dem bei einer Innen- und/oder Außenbenetzung der Windschutzscheibe mit Nässe und/oder Kondensat ein erstes Auswertesignal (St1) erzeugt wird,
- zur Erkennung einer Sichteinschränkung, vorzugsweise durch Nebel und/oder Innen- und/oder Außenbenetzung der Windschutzscheibe mit Nässe und/oder Kondensat die Kamera (1) auf die Fahrzeugumgebung fokussiert ist und wenigstens eine Bildaufnahme erzeugt wird, wobei zur Erzeugung eines die Sichteinschränkung anzeigenden zweiten Auswertesignals (St2) die Bilddaten der wenigstens einen Bildaufnahme der Fahrzeugumgebung von einem Bildverarbeitungssystem (1a) ausgewertet werden, und
- eine Steuereinrichtung (2) vorgesehen ist, die bei erzeugten ersten und zweiten Auswertesignalen (St1, St2) einen die Windschutzscheibe im Sichtbereich der Kamera (1) überstreichenden Scheibenwischer (3) des Fahrzeugs aktiviert,
**dadurch gekennzeichnet, dass**
- die Steuereinrichtung (2) nach einer vorgegebenen Zeitdauer den Scheibenwischer (3) deaktiviert, falls nach der vorgegebenen Zeitdauer nach wie vor das erste und zweite Auswertesignal (St1, St2) vorliegt, und die Steuereinrichtung (2) nach der Deaktivierung der Scheibenwischer (3) eine Scheibenheizung (4) des Fahrzeugs aktiviert, und
- die Steuereinrichtung (2) bei ausschließlichem Vorliegen des zweiten Auswertesignals (St2) eine Warneinrichtung (5) des Fahrzeuges und/oder einen Nebelscheinwerfer (6) des Fahrzeugs und/oder eine Nebelschlussleuchte (7) des Fahrzeugs aktiviert.

3. Verfahren nach Anspruch 2,
**dadurch gekennzeichnet, dass**
der Regensensor (10) als opto-elektronischer Sensor ausgebildet ist.

4. Verfahren nach einem der vorhergehenden Ansprüche,
**dadurch gekennzeichnet, dass**
Bilddaten der von der Kamera (1) aufgenommen Fahrzeugumgebung einem weiteren Bildverarbeitungssystem zugeführt werden.

5. Verfahren nach einem der vorhergehenden Ansprüche,
**dadurch gekennzeichnet, dass**
die Bildaufnahme der Fahrzeugumgebung mit einer unendlichen Brennweite aufgenommen wird.

6. Verfahren nach einem der vorhergehenden Ansprüche,
**dadurch gekennzeichnet, dass**
zur Erzeugung eines die Sichteinschränkung anzeigenden zweiten Auswertesignals die Bilddaten der wenigstens einen Bildaufnahme der Fahrzeugumgebung von dem Bildverarbeitungssystem (1a) auf der Basis der Kontrastgüte der Bilddaten ausgewertet werden.

7. Vorrichtung zur Fahrerunterstützung beim Fahren eines Fahrzeugs durch Detektion von wetterbedingten Sichteinschränkungen, bei welcher mittels einer auf die Windschutzscheibe gerichteten Kamera (1) Bilddaten der Fahrzeugumgebung und der Windschutzscheibe erzeugt werden, **dadurch gekennzeichnet, dass**
- die Kamera (1) ein bifokales optisches Element umfasst, so dass die Kamera (1) in einem ersten Bildbereich auf die Windschutzscheibe und in einem zweiten Bildbereich auf die Fahrzeugumgebung fokussiert ist,
- eine Steuereinrichtung (2) vorgesehen ist, die die Kamera (1) derart ansteuert, dass wenigstens eine Bildaufnahme der Windschutzscheibe und der Fahrzeugumgebung erzeugt wird,
wobei zur Erzeugung eines eine Innen- und/oder Außenbenetzung der Windschutzscheibe mit Nässe und/oder Kondensat anzeigenden ersten Auswertesignals (St1) die Bilddaten des ersten Bildbereichs der wenigstens einen Bildaufnahme von einem Bildverarbeitungssystem (1a) ausgewertet werden und wobei zur Erzeugung eines die Sichteinschränkung anzeigenden zweiten Auswertesignals (St2) die Bilddaten des zweiten Bildbereichs der wenigstens einen Bildaufnahme von einem Bildverarbeitungssystem (1a) ausgewertet werden,
- die Steuereinrichtung (2) bei erzeugten ersten und zweiten Auswertesignalen (St1, St2) einen die Windschutzscheibe im Sichtbereich der Kamera (1) überstreichenden Scheibenwischer (3) des Fahrzeugs aktiviert und nach einer vorgegebenen Zeitdauer deaktiviert, falls nach der vorgegebenen Zeitdauer nach wie vor das erste und zweite Auswertesignal (St1, St2) vorliegt und die nach der Deaktivierung der Scheibenwischer (3) eine Scheibenheizung (4) des Fahrzeugs aktiviert, und
- die Steuereinrichtung (2) bei ausschließlichem Vorliegen des zweiten Auswertesignals (St2) eine Warneinrichtung (5) des Fahrzeuges und/oder einen Nebelscheinwerfer (6) des Fahrzeugs und/oder eine Nebelschlussleuchte (7) des Fahrzeugs aktiviert.

8. Vorrichtung zur Fahrerunterstützung beim Fahren eines Fahrzeugs durch Detektion von wetterbedingten Sichteinschränkungen, bei welcher mittels einer auf die Windschutzscheibe gerichteten Kamera (1) Bilddaten der Fahrzeugumgebung erzeugt werden, wobei
- ein Regensensor (10) vorgesehen ist, mittels dem bei einer Innen- und/oder Außenbenetzung der Windschutzscheibe mit Nässe und/oder Kondensat ein erstes Auswertesignal erzeugt wird,
- eine Steuereinrichtung (2) vorgesehen ist, die die Kamera (1) derart ansteuert, dass zur Erkennung einer Sichteinschränkung, vorzugsweise durch Nebel und/oder Innen- und/oder Außenbenetzung der Windschutzscheibe mit Nässe und/oder Kondensat wenigstens eine Bildaufnahme erzeugt wird, wobei zur Erzeugung eines die Sichteinschränkung anzeigenden zweiten Auswertesignals (St2) die Bilddaten der wenigstens einen Bildaufnahme der Fahrzeugumgebung von einem Bildverarbeitungssystem (1a) ausgewertet werden, und
- die Steuereinrichtung (2) bei erzeugten ersten und zweiten Auswertesignalen (St1, St2) einen die Windschutzscheibe im Sichtbereich der Kamera (1) überstreichenden Scheibenwischer (3) des Fahrzeugs aktiviert,
**dadurch gekennzeichnet, dass**
- die Steuereinrichtung (2) nach einer vorgegebenen Zeitdauer den Scheibenwischer (3) deaktiviert, falls nach der vorgegebenen Zeitdauer nach wie vor das erste und zweite Auswertesignal (St1, St2) vorliegt und die Steuereinrichtung (2) nach der Deaktivierung der Scheibenwischer (3) eine Scheibenheizung (4) des Fahrzeugs aktiviert, und
- die Steuereinrichtung (2) bei ausschließlichem Vorliegen des zweiten Auswertesignals (St2) eine Warneinrichtung (5) des Fahrzeuges und/oder einen Nebelscheinwerfer (6) des Fahrzeugs und/oder eine Nebelschlussleuchte (7) des Fahrzeugs aktiviert.

9. Vorrichtung nach Anspruch 8,
**dadurch gekennzeichnet, dass**
der Regensensor (10) als opto-elektronischer Sensor ausgebildet ist.

## Claims

1. A method for supporting the driver while driving a vehicle through the detection of weather-related view restrictions, in which, by means of a camera (1) oriented to the windscreen, image data of the vehicle environment and of the windscreen is generated, wherein at least one recorded image is generated by the camera (1), **characterized in that**
- the camera (1) comprises a bifocal optical element, so that the camera (1) is focussed on the windscreen in a first image section and on the vehicle environment in a second image section,
- in order to detect internal and/or external wetting of the windscreen with moisture and/or condensate, the image data from the first image section of the at least one recorded image is evaluated by an image processing system (1a) and, if wetting is detected, a first evaluation signal (St1) is generated which indicates internal and/or external wetting of the windscreen with moisture and/or condensate,
- in order to detect a view restriction, preferably due to fog and/or internal and/or external wetting of the windscreen with moisture and/or condensate, the image data from the second image section of the at least one recorded image is evaluated by an image processing system (1a) and, if a view restriction is detected, a second evaluation signal (St2) is generated which indicates the view restriction,
- a control facility (2) is provided which, if the first and second evaluation signals (St1, St2) are generated, activates a windscreen wiper (3) of the vehicle which wipes over the windscreen in the viewing range of the camera (1), and deactivates it after a specified period of time if the first and second evaluation signal (St1, St2) continue to be present after the specified period of time, and activates windscreen heating (4) of the vehicle after the windscreen wipers (3) have been deactivated, and
- the control facility (2) activates a warning facility (5) of the vehicle and/or a fog headlight (6) of the vehicle and/or a fog tail light (7) of the vehicle if only the second evaluation signal (St2) is present.

2. A method for supporting the driver while driving a vehicle through the detection of weather-related view restrictions, in which, by means of a camera (1) oriented to the windscreen, image data of the vehicle environment is generated, wherein
- a rain sensor (10) is provided by means of which a first evaluation signal (St1) is generated if there is internal and/or external wetting of the windscreen with moisture and/or condensate,
- in order to detect a view restriction, preferably due to fog and/or internal and/or external wetting of the windscreen with moisture and/or condensate, the camera (1) is focussed on the vehicle environment and at least one recorded image is generated, wherein, in order to generate a second evaluation signal (St2) which indicates the view restriction, the image data of the at least one recorded image of the vehicle environment is evaluated by an image processing system (1 a), and
- a control facility (2) is provided which activates a windscreen wiper (3) of the vehicle which wipes over the windscreen in the viewing range of the camera (1) if the first and second evaluation signals (St1, St2) are generated, **characterized in that**
- the control facility (2) deactivates the windscreen wiper (3) after a specified period of time if the first and second evaluation signal (St1, St2) continue to be present after the specified period of time, and the control facility (2) activates windscreen heating (4) of the vehicle after the windscreen wipers (3) have been deactivated, and
- the control facility (2) activates a warning facility (5) of the vehicle and/or a fog headlight (6) of the vehicle and/or a fog tail light (7) of the vehicle if only the second evaluation signal (St2) is present.

3. The method according to claim 2,
**characterized in that**
the rain sensor (10) is designed as an opto-electronic sensor.

4. The method according to any one of the preceding claims,
**characterized in that**
image data of the vehicle environment recorded by the camera (1) is supplied to a further image processing system.

5. The method according to any one of the preceding claims,
**characterized in that**
the recorded image of the vehicle environment is captured using an infinite focal distance.

6. The method according to any one of the preceding claims,
**characterized in that**
in order to generate a second evaluation signal which indicates the view restriction, the image data of the at least one recorded image of the vehicle environment is evaluated by the image processing system (1 a) on the basis of the contrast quality of the image data.

7. A device for supporting the driver while driving a vehicle through the detection of weather-related view restrictions, in which, by means of a camera (1) oriented to the windscreen, image data of the vehicle environment and of the windscreen is generated,
**characterized in that**
- the camera (1) comprises a bifocal optical element, so that the camera (1) is focussed on the windscreen in a first image section and on the vehicle environment in a second image section,
- a control facility (2) is provided which triggers the camera (1) in such a manner that at least one recorded image of the windscreen and of the vehicle environment is generated,
- wherein, in order to generate a first evaluation signal (St1) which indicates internal and/or external wetting of the windscreen with moisture and/or condensate, the image data from the first image section of the at least one recorded image is evaluated by an image processing system (1 a), and
- wherein, in order to generate a second evaluation signal (St2) which indicates the view restriction, the image data from the second image section of the at least one recorded image is evaluated by an image processing system (1 a)
- if the first and second evaluation signals (St1, St2) are generated, the control facility (2) activates a windscreen wiper (3) of the vehicle which wipes over the windscreen in the viewing range of the camera (1), and deactivates it after a specified period of time if the first and second evaluation signal (St1, St2) continue to be present after the specified period of time, and activates windscreen heating (4) of the vehicle after the windscreen wipers (3) have been deactivated, and
- the control facility (2) activates a warning facility (5) of the vehicle and/or a fog headlight (6) of the vehicle and/or a fog tail light (7) of the vehicle if only the second evaluation signal (St2) is present.

8. A device for supporting the driver while driving a vehicle through the detection of weather-related view restrictions, in which, by means of a camera (1) oriented to the windscreen, image data of the vehicle environment is generated, wherein
- a rain sensor (10) is provided by means of which a first evaluation signal is generated if there is internal and/or external wetting of the windscreen with moisture and/or condensate,
- a control facility (2) is provided which triggers the camera (1) in such a manner that, in order to detect a view restriction, preferably due to fog and/or internal and/or external wetting of the windscreen with moisture and/or condensate, at least one recorded image is generated, wherein, in order to generate a second evaluation signal (St2) which indicates the view restriction, the image data of at least one recorded image of the vehicle environment is evaluated by an image processing system (1 a), and
- the control facility (2) activates a windscreen wiper (3) of the vehicle which wipes over the windscreen in the viewing range of the camera (1) if the first and second evaluation signals (St1, St2) are generated,
**characterized in that**
- the control facility (2) deactivates the windscreen wiper (3) after a specified period of time if the first and second evaluation signal (St1, St2) continue to be present after the specified period of time, and the control facility (2) activates windscreen heating (4) of the vehicle after the windscreen wipers (3) have been deactivated, and
- the control facility (2) activates a warning facility (5) of the vehicle and/or a fog headlight (6) of the vehicle and/or a fog tail light (7) of the vehicle if only the second evaluation signal (St2) is present.

9. A device according to claim 8,
**characterized in that**
the rain sensor (10) is designed as an opto-electronic sensor.

## Revendications

1. Procédé d'assistance au conducteur lors de la conduite d'un véhicule par la détection de restrictions visuelles liées aux conditions météorologiques, dans lequel, au moyen d'une caméra (1) dirigée vers le parebrise, des données d'images de l'environnement du véhicule et du parebrise sont produites, au moins une capture d'images étant produite par la caméra (1),
**caractérisé en ce que**
- la caméra (1) comprend un élément optique bifocal de telle sorte que la caméra (1) est focalisée dans une première zone d'images sur le parebrise et dans une deuxième zone d'images sur l'environnement du véhicule,
- pour la détection d'un mouillage intérieur et/ou extérieur du parebrise avec de l'humidité et/ou du condensat, les données d'images de la première zone d'images de la capture d'images au moins au nombre de un sont analysées par un système de traitement d'images (1a) et, en cas de détection, un premier signal d'analyse (St1) indiquant un mouillage intérieur et/ou extérieur du parebrise avec de l'humidité et/ou du condensat est produit,
- pour la détection d'une restriction visuelle, de préférence par du brouillard et/ou un mouillage intérieur et/ou extérieur du parebrise avec de l'humidité et/ou du condensat, les données d'images de la deuxième zone d'images de la capture d'images au moins au nombre de un sont analysées par un système de traitement d'images (1a) et, en cas de détection, un deuxième signal d'analyse (St2) indiquant la restriction visuelle est produit,
- il est prévu un dispositif de commande (2) qui, dans le cas de premier et deuxième signaux d'analyse (St1, St2) produits, active un essuie-glace (3) du véhicule frottant le parebrise dans la zone de vision de la caméra (1) et le désactive après une durée prédéfinie si, après la durée prédéfinie, le premier et le deuxième signal d'analyse (St1, St2) sont toujours présents, et qui active un chauffage de vitre (4) du véhicule après la désactivation des essuie-glace (3), et
- le dispositif de commande (2), en cas de présence exclusive du deuxième signal d'analyse (St2), active un dispositif d'alarme (5) du véhicule et/ou un phare antibrouillard (6) du véhicule et/ou un feu de brouillard arrière (7) du véhicule.

2. Procédé d'assistance au conducteur lors de la conduite d'un véhicule par la détection de restrictions visuelles liées aux conditions météorologiques, dans lequel, au moyen d'une caméra (1) dirigée vers le parebrise, des données d'images de l'environnement du véhicule et du parebrise sont produites,
- un capteur de pluie (10) étant prévu, au moyen duquel, en cas de mouillage intérieur et/ou extérieur du parebrise avec de l'humidité et/ou du condensat, un premier signal d'analyse (St1) est produit,
- pour la détection d'une restriction visuelle, de préférence par du brouillard et/ou un mouillage intérieur et/ou extérieur du parebrise avec de l'humidité et/ou du condensat, la caméra étant focalisée sur l'environnement du véhicule, et au moins une capture d'images étant produite, les données d'images de la capture d'images au moins au nombre de un de l'environnement du véhicule étant analysées par un système de traitement d'images (1a) pour la production d'un deuxième signal d'analyse (St2) indiquant la restriction visuelle, et
- un dispositif de commande (2) étant prévu qui, dans le cas de premier et deuxième signaux d'analyse (St1, St2) produits, active un essuie-glace (3) du véhicule frottant le parebrise dans la zone de vision de la caméra (1),
**caractérisé en ce que**
- après une durée prédéfinie, le dispositif de commande (2) désactive l'essuie-glace (3) si, après la durée prédéfinie, le premier et le deuxième signal d'analyse (St1, St2) sont toujours présents, et le dispositif de commande (2) active un chauffage de vitre (4) du véhicule après la désactivation des essuie-glace (3), et
- en cas de présence exclusive du deuxième signal d'analyse (St2), le dispositif de commande (2) active un dispositif d'alarme (5) du véhicule et/ou un phare antibrouillard (6) du véhicule et/ou un feu de brouillard arrière (7) du véhicule.

3. Procédé selon la revendication 2,
**caractérisé en ce que**
le capteur de pluie (10) est constitué en tant que capteur optoélectronique.

4. Procédé selon une des revendications précédentes,
**caractérisé en ce que**
des données d'images de l'environnement du véhicule capturées par la caméra (1) sont conduites à un autre système de traitement d'images.

5. Procédé selon une des revendications précédentes,
**caractérisé en ce que**
la capture d'images de l'environnement du véhicule est effectuée avec une distance focale sur l'infini.

6. Procédé selon une des revendications précédentes,
**caractérisé en ce que**, pour la production d'un deuxième signal d'analyse indiquant la restriction visuelle, les données d'images de la capture d'images au moins au nombre de un de l'environnement du véhicule sont analysées par le système de traitement d'images (1a) sur la base de la qualité de contraste des données d'images.

7. Dispositif d'assistance au conducteur lors de la conduite d'un véhicule par la détection de restrictions visuelles liées aux conditions météorologiques, dans lequel, au moyen d'une caméra (1) dirigée vers le parebrise, des données d'images de l'environnement du véhicule et du parebrise sont produites, **caractérisé en ce que**
- la caméra (1) comprend un élément optique bifocal de telle sorte que la caméra (1) est focalisée dans une première zone d'images sur le parebrise et dans une deuxième zone d'images sur l'environnement du véhicule,
- il est prévu un dispositif de commande (2) qui pilote la caméra (1) de telle sorte qu'au moins une capture d'images du parebrise et de l'environnement du véhicule est produite,
les données d'images de la première zone d'images de la capture d'images au moins au nombre de un étant analysées par un système de traitement d'images (1a) pour la production d'un premier signal d'analyse (St1) indiquant un mouillage intérieur et/ou extérieur du parebrise avec de l'humidité et/ou du condensat, et les données de la deuxième zone d'images de la capture d'images au moins au nombre de un étant analysées par un système de traitement d'images (1a) pour la production d'un deuxième signal d'analyse (St2) indiquant la restriction visuelle,
- dans le cas de premier et deuxième signaux d'analyse (St1, St2) produits, le dispositif de commande (2) active un essuie-glace (3) du véhicule frottant le parebrise dans la zone de vision de la caméra (1) et le désactive après une durée prédéfinie si, après la durée prédéfinie, le premier et le deuxième signal d'analyse (St1, St2) sont toujours présents, et active un chauffage de vitre (4) du véhicule après la désactivation des essuie-glace (3), et
- le dispositif de commande (2), en cas de présence exclusive du deuxième signal d'analyse (St2), active un dispositif d'alarme (5) du véhicule et/ou un phare antibrouillard (6) du véhicule et/ou un feu de brouillard arrière (7) du véhicule.

8. Dispositif d'assistance au conducteur lors de la conduite d'un véhicule par la détection de restrictions visuelles liées aux conditions météorologiques, dans lequel, au moyen d'une caméra (1) dirigée vers le parebrise, des données d'images de l'environnement du véhicule et du parebrise sont produites,
- un capteur de pluie (10) étant prévu, au moyen duquel, en cas de mouillage intérieur et/ou extérieur du parebrise avec de l'humidité et/ou du condensat, un premier signal d'analyse (St1) est produit,
- un dispositif de commande (2) étant prévu, qui pilote la caméra (1) de telle sorte que, pour la détection d'une restriction visuelle, de préférence par du brouillard et/ou un mouillage intérieur et/ou extérieur du parebrise avec de l'humidité et/ou du condensat, il est produit au moins une capture d'images, les données d'images de la capture d'images au moins au nombre de un de l'environnement du véhicule étant analysées par un système de traitement d'images (1a) pour la production d'un deuxième signal d'analyse (St2) indiquant la restriction visuelle, et
- dans le cas de premier et deuxième signaux d'analyse (St1, St2) produits, le dispositif de commande (2) activant un essuie-glace (3) du véhicule frottant le parebrise dans la zone de vision de la caméra (1),
**caractérisé en ce que**
- le dispositif de commande (2), après une durée prédéfinie, désactive l'essuie-glace (3) si, après la durée prédéfinie, le premier et le deuxième signal d'analyse (St1, St2) sont toujours présents, et le dispositif de commande (2) active un chauffage de vitre (4) du véhicule après la désactivation des essuie-glace (3), et
- le dispositif de commande (2), en cas de présence exclusive du deuxième signal d'analyse (St2), active un dispositif d'alarme (5) du véhicule et/ou un phare antibrouillard (6) du véhicule et/ou un feu de brouillard arrière (7) du véhicule.

9. Dispositif selon la revendication 8,
**caractérisé en ce que**
le capteur de pluie (10) est constitué en tant que capteur optoélectronique.
